# EUROPÄISCHE PATENTSCHRIFT

(11) **EP 1 065 509 B1**
(45) Veröffentlichungstag und Bekanntmachung des Hinweises auf die Patenterteilung: **03.11.2004**
(21) Anmeldenummer: 00112549.1
(22) Anmeldetag: 14.06.2000
(51) Int. Cl.: G01R 29/10

(54) **Diagnosevorrichtung für eine Mehrantennenanordnung**
Diagnostic device for multiple antenna system
Dispositif de diagnostique pour système à plusieurs antennes

(30) Priorität: 02.07.1999 DE 19930571
(43) Veröffentlichungstag der Anmeldung: 03.01.2001
(73) Patentinhaber: FUBA Automotive GmbH & Co. KG, 31162 Bad Salzdetfurth (DE)
(72) Erfinder: Thimm, Peter, 31171 Nordstemmen (DE); Wagner, Martin, 31162 Bad Salzdetfurth (DE)
(74) Vertreter: Sobisch, Peter

(56) Entgegenhaltungen:
- EP-A- 0 806 849
- EP-A- 0 816 859
- EP-A- 0 977 044

## Beschreibung

Die Erfindung bezieht sich auf eine Diagnoseanordnung entsprechend dem Oberbegriff des Anspruchs 1.

Bei der Prüfung der aktiven und passiven Komponenten einer mobilen Empfangsanlage, insbesondere der in einem Kraftfahrzeug installierten Rundfunkempfangsanlage, sei es herstellerseitig im Rahmen der Bandende-Kontrolle des Fahrzeugs oder auch in Kraftfahrzeugwerkstätten stellt sich bei Mehrantennenanordnungen mit Antennen-Diversity ein Problem, soweit es um die differenzierte Überprüfung der einzelnen Antennen einschließlich des Zustands von deren elektrischer Verbindung mit dem Rundfunkempfänger geht. Abgesehen davon, dass die verfügbaren Schnittstellen zur Anbindung an Mess- und Prüfsysteme häufig schwer zugänglich sind und umfangreiche Demontagearbeiten erforderlich machen, ist zu einem konkreten Zeitpunkt nicht bekannt, welche Antenne in Anbetracht der Schaltstellung des Antennen-Diversitys gerade aufgeschaltet ist. Insbesondere ist dies über eine Messung des Empfangspegels an der Antennenanschlußbuchse des Rundfunkempfängers gerade nicht erreichbar, da bei einem Diversity-System u. a. dann, wenn der Signalpegel einen bestimmten vorgegebenen Wert unterschreitet, über einen entsprechenden Umschalter der Rundfunkempfänger automatisch an eine der nächsten Antennen gelegt wird, bei welcher ein ausreichender Empfangspegel feststellbar ist.

Aus der EP 0 806 849 A2 ist eine Schaltungsanordnung zur Funktionsprüfung mobiler Rundfunkempfangsanlagen bekannt, die auch bei Diversity-Systemen einsetzbar ist. Die zugrundeliegende Idee besteht darin, dass über die Schaltanordnung ausgangsseitig ein Hochfrequenzsignal erzeugt wird, welches der eingestellten Empfangsfrequenz des Rundfunkempfängers im wesentlichen entspricht und welches über die Empfangsantenne eingekoppelt wird, wobei der Pegel des empfangenen Signals gemessen wird. Mittels eines Schaltsignalgenerators kann eine sequentielle Weiterschaltung des Antennenumschalters einer Diversity-Schaltung vorgenommen werden, so dass das eingangs genannte Hochfrequenzsignal über unterschiedliche Antennen des Diversity-Systems eingekoppelt und die Empfangsleistung der einzelnen Antenne gemessen werden kann. Ein definierter Ausgangszustand zu Beginn der Funktionsprüfung ist bei diesem System jedoch nicht gegeben.

Aus der EP 0 816 859 A2 ist eine vergleichbare, für eine Mehrantennenanordnung bei Fahrzeugen bestimmte Diagnoseschaltanordnung bekannt, bei der eine zur Abstrahlung eines Testsignales bestimmte Sendeantenne in eine Kraftfahrzeugscheibe mit leitenden Strukturen integriert ist. Die Antennenanordnung mit einer Diversity-Schaltung steht in üblicher Weise mit wenigstens einem Empfänger in Verbindung und es erfolgt die Untersuchung der Mehrantennenanordnung unter Mitwirkung eines Diagnose-Computers sowie des genannten Empfängers. Das Testsignal wird von den übrigen Antennen der Antennenanordnung empfangen, wobei die jeweils empfangenen Signale der Diagnose zugrundegelegt werden. Zu diesem Zweck ist eine Diversity-Schaltung mit einer Steuerlogik zur Auslösung des über einen Signalgenerator erzeugten Testsignales sowie zur Betätigung eines Umschalters vorgesehen, der für einen Wechsel zwischen den Schaltzuständen Normalbetriebmodus und Diagnosebetriebmodus bestimmt ist. Die Auswertung der im Diagnosebetriebmodus empfangenen Signale erfolgt unter Mitwirkung des Diagnose-Computers getrennt für jede Antenne bzw jedes Frequenzband.

Aus der DE 195 13 872 A1 ist eine weitere Schaltungsanordnung zum Prüfen von Mehrantennen-Systemen bekannt, welche darauf abzielt, diese Prüfung einfach zu gestalten. Die zugrundeliegende Idee besteht hier darin, mittels einer jeweils antennenspezifischen Impulsfolge, die entweder mittelbar über den Rundfunkempfänger oder über ein externes Prüfgerät erzeugt wird, mit einer besonderen Konverterschaltung auf den Umschalter des Antennen-Diversitys dahingehend einzuwirken, dass nach Maßgabe dieser Impulsfolge jeweils eine bestimmte Antenne an den Rundfunkempfänger durchgeschaltet wird. Die Impulsfolge kann entweder über das Antennenkabel oder einen Zwischenfrequenzausgang des Rundfunkempfängers in die Diversity-Schaltung eingespeist werden, und zwar jeweils unter Zwischenanordnung von Filtern, deren Zweck in der Trennung der Prüfimpulse von den Hauptsignalen besteht, die über diese Leitungen laufen. Über den gleichen Kanal wird anschließend ein Testsignal geleitet, mit dem die Empfangsbedingungen der einzelnen Antenne geprüft werden können.

Wesentlich für diese bekannten Systeme ist, dass zum Zweck der Funktionsprüfung schaltungstechnische Eingriffe bzw. Veränderungen vorgenommen werden müssen, die die Diversity-Schaltung und/oder den Rundfunkempfänger betreffen. Für eine Überprüfung bestehender Rundfunkempfangsanlagen mit Antennen-Diversity sind diese Systeme somit nicht geeignet.

Schließlich ist aus dem nicht vorveröffentlichten Dokument EP 0 977 044 A1 eine Diagnosevorrichtung bekannt, die als externes, mit einer Sendeantenne ausgerüstetes Prüfgerät konzipiert ist, das zum Zweck der Diagnose mit einer Mehrantennenanordnung verbindbar ist. Diese Verbindung ist als Steckverbindung angelegt und erfolgt über einen HF-Ausgang und einen ZF-Eingang der Mehrfachantennenanordnung. Das Prüfgerät ist mit Sende- und Empfangseinheiten ausgerüstet und es kann jede Antenne der Mehrantennenanordnung über einen Betriebsschalter individuell angewählt und einer Überprüfung unterzogen werden.

Es ist die Aufgabe der Erfindung, eine gattungsgemäße Diagnosevorrichtung für Mehrantennensysteme dahingehend auszugestalten, dass in einfacher Weise ohne schaltungstechnische Eingriffe in die Empfangsanlage ein differenziertes Überprüfen der einzelnen Antennen ermöglicht wird. Gelöst ist diese Aufgabe bei einer solchen Diagnosevorrichtung durch die Merkmale des Kennzeichnungsteils des Anspruchs 1.

Erfindungswesentlich ist zunächst einmal, dass von dem zu prüfenden Antennensystem lediglich zwei Schnittstellen benötigt werden, nämlich der übliche ZF-Eingang der Diversity-Schaltung der Mehrantennenanordnung sowie der HF-Ausgang der Antennenanlage. Diese beiden Schnittstellen dienen zur Anbindung einer Prüfeinheit sowie einer Steuereinheit, die erfindungsgemäß als externe Geräte konzipiert sind, die im Rahmen der Bandende-Kontrolle oder bei Kraftfahrzeugwerkstätten einsetzbar sind. Es sind somit keine schaltungstechnischen Eingriffe in passive oder aktive Funktionselemente der Antennenanlage bzw. des Rundfunkempfängers erforderlich. Insbesondere kann es sich um herkömmliche Diversity-Systeme handeln, denen im Diversity-Modus ein Steuersignal übertragen wird, welches aus einem ZF-Signal, das heißt bei FM-Empfang einem 10,7 MHz Signal besteht, dem ein Gleichspannungsanteil zugefügt ist. Die Prüfeinheit umfaßt zunächst einmal ein Sende- und ein Empfangsmodul und dient dem Aufbau eines HF-Kreises, in den das zu prüfende Mehrantennensystem eingebunden ist. Zu diesem Zweck ist eine Sendeantenne vorgesehen, über welche ein durch die Prüfeinheit generiertes Testsignal abgestrahlt wird, welches in die durchgeschaltete Antenne des Mehrantennensystems eingespeist wird und über dieses erneut zwecks Analyse der Prüfeinheit zugeleitet wird. Die Prüfeinheit steht ihrerseits mit einer Steuereinheit in Wirkverbindung, welche einen Signalgenerator, eine Gleichspannungsquelle und einen Störsimulator umfasst. Der Zweck der Steuereinheit besteht im wesentlichen darin, die erforderlichen Steuersignale für die Diversity-Schaltung zur Verfügung zu stellen sowie in einer definierten Weise Störungszustände zu simulieren, die in Abhängigkeit von den Eigenschaften und Einstellungen der Diversity-Schaltung mit der Maßgabe angelegt sind, dass auf eine definierte Störung ein Weiterschalten auf die jeweils nächste Antenne des Mehrantennen-Systems veranlaßt wird. Die Diagnose-Vorrichtung ist somit dazu bestimmt, nach Maßgabe von Störzuständen, die über die Steuereinheit generiert werden, ein gezieltes Weiterschalten in der Diversity-Schaltung zu veranlassen, wobei das von der Prüfeinheit empfangene Signal die einwandfreie Funktion der jeweils durchgeschalteten Antenne einschließlich deren Verbindungsleitungen signalisiert. Wesentlich insbesondere für die Zuordnung der Messungen zu einzelnen Antennen ist, dass der Funktionstest mit einem Reset-Modus der Diversity-Schaltung beginnt, die in diesem Stadium zunächst auf eine bestimmte Antenne, die Hauptantenne durchgeschaltet ist, und dass nach Anbindung der Steuereinheit in Verbindung mit dem Hinzufügen einer Gleichspannung zu dem ZF-Signal der Diversity-Modus aktiviert ist, ohne dass zunächst die Antenne gewechselt wird. Mit diesem Zeitpunkt kann nunmehr ein über den Störsimulator in Abstimmung mit der Prüfeinheit abzuwickelndes Prüfverfahren bezüglich der einzelnen Antennen eingeleitet werden.

Das Testsignal, welches über die Prüfeinheit generiert wird, kann entsprechend den Merkmalen des Anspruchs 2 dem ZF-Signal ähnlich sein.

Die Prüfeinheit kann entsprechend den Merkmalen des Anspruchs 3 dahingehend weiter ausgestaltet sein, dass die jeweils antennenspezifischen Meßsignale, ggf. nach Vergleich mit Standardwerten protokolliert und in geeigneter Weise dargestellt werden, so dass anhand eines Meßprotokolls gezielt die elektrischen Verbindungswege einzelner Antennen überprüft werden können.

Besonders vorteilhaft ist es, wenn entsprechend den Merkmalen des Anspruchs 4 die Steuereinheit und die Prüfeinheit eine bauliche Einheit bilden. Es kann sich hierbei um ein einzelnes Gerät handeln, welches jedoch gleichermaßen auch in andere Prüfvorrichtungen integriert sein kann.

Der oder die Antennenverstärker und die Diversity-Schaltungen bilden häufig eine bauliche Einheit bilden. Deshalb ist die erfindungsgemäße Diagnosevorrichtung entsprechend den Merkmalen des Anspruchs 5 zur Anbindung an den ZF-Eingang sowie den HF-Ausgang der Antennenan-ordnung bestimmt.

Wesentlich ist entsprechend den Merkmalen des Anspruchs 6 ferner, dass über den Störsimulator lediglich Störzustände simuliert werden, die während solcher Zeitspannen wirksam sind, die kürzer als die über die Diversity-Schaltung gesteuerte Verweilzeit bei einer einzelnen Antenne ausfallen. Es ist dies eine wesentliche Vorraussetzung dafür, dass ein Weiterschalten lediglich auf die nächstfolgende Antenne des Mehrantennensystems stattfindet, so dass ein differenziertes Messen einer jeden dieser Antennen möglich ist.

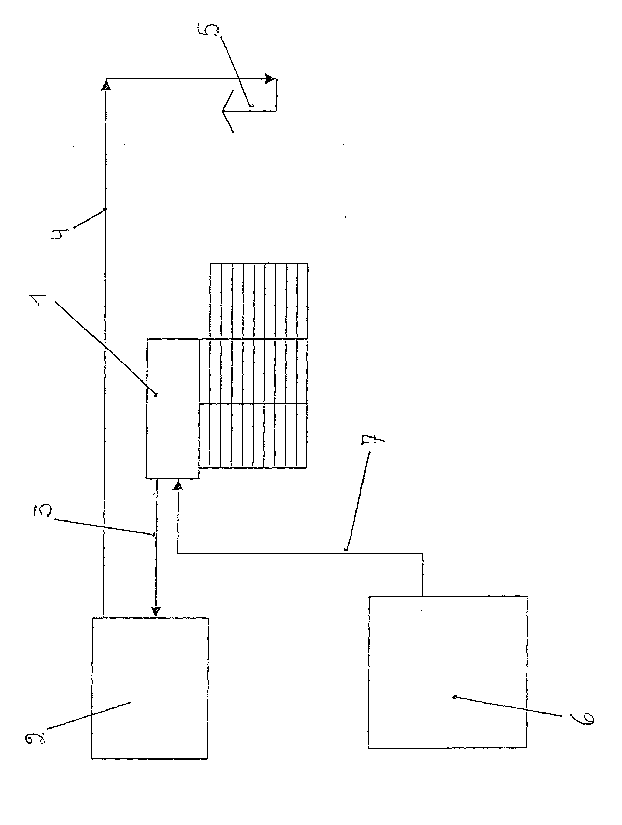

Die Erfindung wird im Folgenden unter Bezugnahme auf das in der Zeichnung schematisch wiedergegebene Ausführungsbeispiel näher beschrieben werden, welche ein Schaltschema zur differenzierten Prüfung einer Mehrantennenanordnung mit Antennen-Diversity zeigt.

Mit 1 ist ein in einem Fahrzeug eingebauter Antennenverstärker bezeichnet, der gleichzeitig eine Diversity-Schaltung umfasst. Zeichnerisch nicht differenziert dargestellt ist die dem Antennenverstärker 1 zugeordnete Spannungsversorgung, die Mehrantennenanordnung des Fahrzeugs sowie deren Anbindung an den oder weitere Antennenverstärker.

Mit 2 ist eine externe Prüfeinheit bezeichnet, die über eine HF-Leitung 3 mit einem entsprechenden Ausgang des Antennenverstärkers 1 in Verbindung steht. Die Prüfeinheit 2 besteht erfindungsgemäß aus einem Sende- und Empfangsmodul sowie aus weiteren Modulen, die auf ein Speichern, Registrieren, Vergleichen, Auswerten und gegebenenfalls Visualisieren von Meßdaten hin ausgelegt sind.

Die Prüfeinheit 2 steht über eine weitere HF-Leitung 4 mit einer Sendeantenne 5 in Verbindung, deren Bedeutung im folgenden noch näher erläutert werden wird.

Mit 6 ist eine Steuereinheit bezeichnet, die über eine weitere HF-Leitung 7 mit einem Eingang des Antennenverstärkers 1 in Verbindung steht. Die Steuereinheit 6 umfaßt einen Signalgenerator, insbesondere einen Sinusgenerator, eine Gleichspannungsquelle und einen Störsimulator. Der Sinusgenerator ist nach Maßgabe der Prüfung im AM oder im FM-Bereich auf die Generierung einer Frequenz von 460 kHz beziehungsweise von 10,7 MHz ausgelegt, wobei dieser Zwischenfreqenz eine Gleichspannung von beispielsweise 12 V aufgeprägt werden kann. Der Störsimulator ist dahingehend eingerichtet, daß das auf diese Weise generierte ZF-Signal kurzzeitig gestört werden kann, um während einer definierten Zeitspanne eine Verschlechterung des Signal-Rausch-Abstands zu simulieren. Diese Zeitspanne ist in Abstimmung mit den entsprechenden Einstellungen des Diversity-Prozessors dahingehend gewählt, daß diese kürzer bemessen ist als die Mindestverweilzeit bei einer Antenne der Mehrantennenanordnung. Es ist dies die wesentliche Voraussetzung dafür, daß in definierter Weise ein Weiterschalten von einer Antenne zu einer nächstfolgenden möglich ist.

Üblicherweise wird ein Diversity-System über die Zwischenfrequenz des Empfängers und ein Gleichspannungssignal gesteuert, wobei das Gleichspannungssignal zur Aktivierung eines Diversity-Modus benutzt wird. Bei den eingangs genannten, dem Stand der Technik zuzuordnenden Systemen werden diese beiden Signale durch bestimmte Modulteile des Empfängers generiert.

Bei den beiden Schnittstellen des Antennenverstärkers handelt es sich somit um den für das Diversity-System benötigten ZF-Eingang einerseits und den ansonsten zur Anbindung an die Eingangsbuchse des Empfängers bestimmten HF-Ausgang andererseits. Lediglich diese beiden Schnittstellen werden somit benötigt, um erfindungsgemäß eine Diagnose des Mehrantennensystems durchzuführen. Bei der Prüfeinheit 2 sowie der Steuereinheit 6 kann es somit um externe Geräte handeln, die baulich voneinander getrennt sind, die jedoch auch eine Einheit bilden können.

Zur Durchführung einer Diagnose werden somit zunächst die HF-Verbindungen zwischen der Prüfeinheit 2, der Steuereinheit 6 und dem Antennenverstärker 1 hergestellt. Das Diversity-System steht hierbei zunächst aufgrund der noch offenen Schnittstellen und des Fehlens eines Gleichspannungssignals auf einer bestimmten bekannten Antenne, nämlich der Hauptantenne. Über die Steuereinheit 6 wird nunmehr ein ZF-Signal mit einem Pegel von ca. 40 dBµV zur Verfügung gestellt sind, und zwar im Fall eines FM-Empfangs mit der üblichen Zwischenfrequenz von 10,7 MHz. Es kann sich hierbei um ein reines unmoduliertes Sinussignal handeln. Ein Gleichspannungssignal wird diesem ZF-Signal nunmehr langsam aufgeprägt, so daß das Diversity-System vom Reset-Modus in den Diversity-Modus gebracht wird, ohne daß zunächst ein Wechsel der Antenne stattfindet. Dadurch wird erreicht, daß ein ungestörtes ZF-Signal in das Diversity-System eingespeist wird. Nachdem die Hauptantenne des Mehrantennensystems bekannt ist, liegt in dieser Anfangsphase somit ein definierter Ausgangszustand für die nunmehr folgende Funktionsprüfung vor. Anschließend wird das ZF-Signal kurzzeitig mittels des Störsimulators- wie oben bereits dargelegt - gestört, wobei diese Störung über das Diversity-System erkannt wird und in an sich bekannter Weise eine Weiterschaltung auf die nächstfolgende Antenne nach Maßgabe eines vorgegebenen Zyklus auslöst. Da - wie ebenfalls bereits erwähnt - die Störung nur sehr kurzzeitig ansteht, findet ein Weiterschalten lediglich auf die unmittelbar im Rahmen eines Zyklus folgende Antenne statt.

Über die Prüfeinheit 2 wird während dieser Vorgänge ein Testsignal von einer definierten Leistung und in einem definierten Frequenzbereich über die Sendeantenne 5 abgestrahlt, welches über die nicht wiedergegebene Empfangsantenne der Mehrantennenanordnung in den Antennenverstärker 1 gelangt. In Abhängigkeit von der jeweils durchgeschalteten Antenne des Mehrantennensystems, somit in Abstimmung mit der Steuereinheit 6 werden nunmehr die Empfangsdaten einer jeden Antenne individuell vermessen und ausgewertet, beispielsweise durch Vergleich mit Standarddaten, wobei die Meßergebnisse in geeigneter Weise protokolliert oder auch visualisiert werden können.

Im Gegensatz zu den eingangs dargelegten Systemen bietet die erfindungsgemäße Diagnosevorrichtung somit den Vorzug, daß über die ohnehin vorhandenen Schnittstellen eines Antennenverstärkers mit angeschlossenem Diversity-System bei ansonsten unveränderten Bedingungen eine individuelle Prüfung der einzelnen Antennen eines Mehrantennensystem nach Maßgabe reproduzierbarer Leistungsdaten möglich ist. Es ist auf diese Weise beispielsweise eine besonders einfache Möglichkeit einer Prüfung des Inhalts möglich, ob sämtliche elektrischen Verbindungen zwischen den Antennenstrukturen des Fahrzeugs und dem Antennenver stärker bis hin zum Empfänger gegeben sind.

## Patentansprüche

1. Diagnosevorrichtung für eine zumindest einen ZF-Eingang und einen HF-Ausgang aufweisende Mehrantennenanordnung mit einer Diversity-Schaltung, die als externes, mit der Diversity-Schaltung zu verbindendes Gerät konzipiert ist, wobei das Gerät aus einer Prüfeinheit (2) und einer Steuereinheit (6) besteht, wobei die Prüfeinheit (2) zumindest aus einem Sende- und einem Empfangsmodul, einer Sendeantenne (5) und einem Speichermodul besteht, wobei die Steuereinheit (6) zumindest aus einem Signalgenerator, einer Gleichspannungsquelle und einem Störsimulator besteht, wobei die Prüfeinheit (2) sowie die Steuereinheit (6) zur Verbindung mit dem ZF-Eingang sowie dem HF-Ausgang der Mehrantennenanordnung eingerichtet sind, wobei die Prüfeinheit (2) zur Abstrahlung eines Testsignals über die Sendeantenne (5) sowie zum Empfang und zur Auswertung dieses über jeweils eine Antenne der Mehrantennenanordnung empfangenen Testsignals eingerichtet ist, wobei die Steuereinheit (6) zum Generieren eines ZF-Signals und eines Störsignals und zum Einspeisen einer Gleichspannung eingerichtet ist, wobei die Gleichspannung zum Aktivieren des Diversity-Modus bestimmt ist und wobei das Störsignal zur Überlagerung des ZF-Signals mit der Maßgabe angelegt ist, dass über die Diversity-Schaltung ein Weiterschalten auf eine andere Antenne der Mehrantennenanordnung ausgelöst wird.

2. Diagnosevorrichtung nach Anspruch 1, **dadurch gekennzeichnet, dass** das Testsignal dem ZF-Signal zumindest ähnlich ist.

3. Diagnosevorrichtung nach Anspruch 1 oder 2, **dadurch gekennzeichnet, dass** die Prüfeinheit (2) für ein antennenspezifisches Auswerten der empfangenen Signale, zum Protokollieren und zum Visualisieren derselben eingerichtet ist.

4. Diagnosevorrichtung nach einem der vorrangegangenen Ansprüche 1 bis 3, **dadurch gekennzeichnet, dass** die Prüfeinheit (2) und die Steuereinheit (6) eine bauliche Einheit bilden.

5. Diagnosevorrichtung nach einem der vorrangegangenen Ansprüche 1 bis 4, **dadurch gekennzeichnet, dass** die Diversity-Schaltung mit einem Antennenverstärker (1) eine bauliche Einheit bildet.

6. Diagnosevorrichtung nach einem der vorrangegangenen Ansprüche 1 bis 5, **dadurch gekennzeichnet, dass** der Störsimulator der Steuereinheit (6) dahingehend eingerichtet ist, dass dem generierten ZF-Signal ein Störsignal lediglich während einer solchen Zeitspanne überlagert wird, die kürzer bemessen ist als die durch die Diversity-Schaltung gesteuerte Verweilzeit bei einer einzelnen Antenne der Mehrantennenanordnung.

## Claims

1. Diagnostic device for a multi-antenna array with a diversity circuit having at least one IF input and one HF output, which is designed as an external apparatus to be connected to the diversity circuit, the apparatus consisting of a test unit (2) and a control unit (6), the test unit (2) consisting at least of a transmitting module and a receiving module, a transmitting antenna (5) and a storage module, the control unit (6) consisting at least of a signal generator, a d.c. voltage source and an interference simulator, the test unit (2) and the control unit (6) being adapted to be connected to the IF input and the HF output of the multi-antenna array, the test unit (2) being adapted to beam a test signal via the transmitting antenna (5) and to receive and evaluate this test signal received via an antenna of the multi-antenna array, the control unit (6) being adapted to generate an IF signal and an interference signal and to supply d.c. voltage, the d.c. voltage being intended to activate the diversity mode and the interference signal being applied in order to overlay the IF signal, with the proviso that a switch to another antenna of the multi-antenna array is initiated by means of the diversity circuit.

2. Diagnostic device according to claim 1, **characterised in that** the test signal is at least similar to the IF signal.

3. Diagnostic device according to claim 1 or 2, **characterised in that** the test unit (2) is adapted for antenna-specific evaluation of the signals received, for monitoring and visualising these signals.

4. Diagnostic device according to one of the preceding claims 1 to 3, **characterised in that** the test unit (2) and the control unit (6) form a constructional unit.

5. Diagnostic device according to one of the preceding claims 1 to 4, **characterised in that** the diversity circuit forms a constructional unit with an antenna amplifier (1).

6. Diagnostic device according to one of the preceding claims 1 to 5, **characterised in that** the interference simulator of the control unit (6) is arranged so that an interference signal is only superimposed on the generated IF signal for a length of time which is shorter than the delay time controlled by the diversity circuit for an individual antenna of the multi-antenna array.

## Revendications

1. Dispositif de diagnostic pour une installation multi-antennes présentant au moins une entrée FI et une sortie HF avec un circuit de diversité, qui est conçu comme un appareil externe à connecter sur le circuit de diversité, lequel appareil se compose d'une unité de test (2) et d'une unité de commande (6), l'unité de test (2) se composant au moins d'un module émetteur et d'un module récepteur, d'une antenne émettrice (5) et d'un module de mémoire, l'unité de commande (6) se composant au moins d'un générateur de signaux, d'une source de courant continu et d'un simulateur de perturbations, l'unité de test (2) et l'unité de commande (6) étant conçues pour être connectées à l'entrée FI et à la sortie HF de l'installation multi-antennes, l'unité de test (2) étant conçue en vue de l'émission d'un signal de test par l'antenne d'émission (5) ainsi que de la réception et de l'interprétation de ce signal de test reçu par chacune des antennes de l'installation multi-antennes, l'unité de commande (6) étant conçue en vue de produire un signal FI et un signal de perturbation et de transmettre une tension de courant continu, laquelle tension de courant continu est destinée à activer le module de diversité, et le signal de perturbation étant conçu pour se superposer au signal FI avec le critère que le circuit de diversité doit déclencher la commutation sur une autre antenne du dispositif multi-antennes.

2. Dispositif de diagnostic selon la revendication 1, **caractérisé en ce que** le signal de test est au moins similaire au signal FI.

3. Dispositif de diagnostic selon la revendication 1 ou 2, **caractérisé en ce que** l'unité de test (2) est conçue pour interpréter de manière spécifique à l'antenne les signaux reçus, les rapporter et les visualiser.

4. Dispositif de diagnostic selon l'une des revendications 1 à 3, **caractérisé en ce que** l'unité de test (2) et l'unité de commande (6) forment une unité de construction.

5. Dispositif de diagnostic selon l'une des revendications 1 à 4, **caractérisé en ce que** le circuit de diversité forme une unité de construction avec un amplificateur d'antenne (1).

6. Dispositif de diagnostic selon l'une des revendications 1 à 5, **caractérisé en ce que** le simulateur de perturbations de l'unité de commande (6) est conçu de manière qu'un signal de perturbation ne soit superposé au signal FI généré que pendant un intervalle de temps plus court que le temps de séjour commandé par le circuit de diversité sur chaque antenne du dispositif multi-antennes.
